(19)

Europäisches Patentamt
European Patent Office
Office européen des brevets

(11) **EP 1 995 213 A1**

(12) **EUROPEAN PATENT APPLICATION**
published in accordance with Art. 158(3) EPC

(43) Date of publication:
**26.11.2008 Bulletin 2008/48**

(21) Application number: **07738373.5**

(22) Date of filing: **13.03.2007**

(51) Int Cl.:
*C01B 31/02* (2006.01) *B01J 21/18* (2006.01)
*B01J 23/85* (2006.01) *B01J 35/02* (2006.01)
*B82B 1/00* (2006.01) *B82B 3/00* (2006.01)
*H01J 1/30* (2006.01) *H01J 31/12* (2006.01)

(86) International application number:
**PCT/JP2007/054901**

(87) International publication number:
**WO 2007/105707 (20.09.2007 Gazette 2007/38)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **13.03.2006 JP 2006067148**

(71) Applicant: **Nikon Corporation
Tokyo 100-8331 (JP)**

(72) Inventors:
 • **TAKI, Yusuke
  Tokyo 100-8331 (JP)**
 • **SHINOHARA, Kiyoaki
  Tokyo 100-8331 (JP)**
 • **KIKUCHI, Makiko
  Tokyo 100-8331 (JP)**

(74) Representative: **Viering, Jentschura & Partner
Grillparzerstrasse 14
81675 München (DE)**

(54) **PROCESS FOR PRODUCTION OF CARBON NANOTUBE AGGREGATES, CARBON NANOTUBE AGGREGATES, CATALYST PARTICLE DISPERSION MEMBRANE, ELECTRON EMITTERS, AND FIELD EMISSION DISPLAYS**

(57)    A method for producing a carbon nanotube assembly, the method controlling a growth density of carbon nanotubes on a substrate, includes: a step for preparing a catalyst particle dispersed film-formed substrate including a catalyst particle dispersed film in which metal catalyst particles having a predetermined particle diameter are dispersed among barrier particles; and a thermal CVD step for growing carbon nanotubes from the metal catalyst particles serving as starting points by heat decomposition of an organic compound vapor.

EP 1 995 213 A1

**Description**

**Technical Field**

The present invention relates to a method for producing a carbon nanotube assembly formed by assembling carbon nanotubes having a uniform number of graphene sheets, the method controlling a growth density of the carbon nanotube assembly. The present invention also relates to a carbon nanotube assembly. Furthermore, the present invention relates to a catalyst particle dispersed film for the growth of carbon nanotubes as well as an electron emitting element and a field emission display which use the carbon nanotube assembly.

**Background of the Invention**

A carbon nanotube is a kind of fibrous carbon having a structure of graphene sheets layered like the annual growth rings, and is a nanocarbon fiber having an extremely high aspect ratio where its diameter is from 0.43 nm to several tens of nanometers while its length reaches 100 nm to several millimeters. The graphene sheet here refers to a layer which constitutes a graphite crystal (black lead) and has $sp^2$ hybridized carbon atoms located at the apexes of each hexagon.

A carbon nanotube formed of one graphene sheet is called a single-walled carbon nanotube (SWCNT). A carbon nanotube formed of two graphene sheets is called a double-walled carbon nanotube (DWCNT). A carbon nanotube formed of three graphene sheets is called a triple-walled carbon nanotube (3WCNT). A carbon nanotube formed of four graphene sheets is called a quad-walled carbon nanotube (4WCNT). A carbon nanotube formed of five graphene sheets is called a quint-walled carbon nanotube (5WCNT). Carbon nanotubes formed of six or more graphene sheets are often called multi-walled carbon nanotubes (MWCNT) collectively.

On a cylindrical surface of the graphene sheet, a formation is shown in which a hexagonal mesh formed by carbon atoms is wound in a spiral form, and such a spiral state is called chirality. It is known that various kinds of physical properties of a carbon nanotube vary depending on the number of layers of graphene sheet, the diameter of the tube, and chirality.

As for a method for producing a carbon nanotube assembly, a CVD method using an organic compound vapor as a raw material, an arc discharge method using a graphite electrode, a laser evaporation method, a liquid phase synthesis method, and the like are employed.

For example, Japanese Unexamined Patent Application Publication No. Hei 11-263609 (Document 1) and Japanese Unexamined Patent Application Publication No. 2002-356776 (Document 2) disclose methods for producing a single-walled carbon nanotube assembly at a high purity. As for a method for producing a multi-walled carbon nanotube assembly, Japanese Unexamined Patent Application Publication No. 2004-352512 (Document 3) discloses a method for producing a carbon nanotube mixture containing 50 to 60% double- to quad-walled carbon nanotubes by a CVD method using alcohol as a raw material and using catalyst particles supported on zeolite as a catalyst.

In the meantime, some methods for controlling the formation of catalyst particles have been proposed with the purpose of controlling a growth density of carbon nanotubes.

For example, Japanese Unexamined Patent Application Publication No. 2004-107162 (Document 4) discloses a method in which an alloy layer of a catalytic metal and another metal is formed on a substrate, and a density is controlled by the alloy composition ratio. Furthermore, Japanese Unexamined Patent Application Publication No. 2004-2182 (Document 5) discloses a method in which catalyst particles are added to a microporous catalyst support, and an aligned carbon nanotube assembly is produced at a desired growth density by using the catalyst particles as carbon nanotube growth nuclei. In addition, the Japanese Unexamined Patent Application Publication 2002-289086 (document 6) discloses a method in which catalyst clusters serving as carbon nanotube growth nuclei are formed at a predetermined position by performing etching with a mask material arranged on a film containing catalyst particles, and it is stated that a growth density of carbon nanotubes can be controlled by appropriately selecting a mask material, an etching method, a catalyst material layer, and the like.

On the other hand, as examples in which metal catalyst particles are dispersed and supported on a carbon nanotube assembly, there are methods disclosed in Japanese Unexamined Patent Application Publication No. 2005-279596 (Document 7) and Japanese Unexamined Patent Application Publication No. 2005-125187 (Document 8). Document 7 discloses a method in which a catalytic reaction rate is increased by optimizing the particle diameter size of a catalytic metal supported on carbon nanotubes. Document 8 discloses a gas decomposing unit which exhibits stable performance by arranging multiple carbon nanotubes each bound to functional groups in a mesh structure.

**Disclosure of the Invention**

However, even by using any of these conventionally-known production methods, its product turns out to be a mixture of carbon nanotubes having various structures. Therefore, the current situation is that, except for the case of using the methods for producing an assembly of single-walled carbon nanotubes as described in Documents 1 and 2, production of an assembly of carbon nanotubes each having a desired number of graphene sheets has not been successfully achieved yet.

Meanwhile, as examples for growing a carbon nanotube assembly while controlling its growth density, there are Documents 4, 5, and 6; however, in all of these cases, there is no disclosure for controlling the number of graphene sheets. The method described in Document 4 is a method for performing a desired density control by adjusting an alloy composition ratio of an alloy catalyst film. In the method, there is a problem that an alloy particle diameter is coarsened due to grain growth caused by heat, resulting in inability to maintain initial particle diameter, and therefore an assembly of carbon nanotubes each having a desired number of graphene sheets cannot be obtained. The method described in Document 5, which uses a porous template for controlling a growth density, requires a preparation to adjust the porous diameter of the porous template in order to achieve a desired particle diameter. In the method described in Document 6, it is necessary to perform patterning using masking particles in order to break up neighboring catalyst particles, resulting in requirement for an exposure step, an etching step, and the like. As a result, there arise problems in production cost, and in reliability, such as residual catalytic metal.

Moreover, as for the methods described in Documents 7 and 8, both relate to a carbon nanotube assembly serving as a catalyst support; however, there is no disclosure for controlling a growth density of a carbon nanotube assembly and the number of graphene sheets.

On the other hand, in the case of using a conventional carbon nanotube assembly as an electron source in a field emission display, since the diameter of the tubes and the number of graphene sheets are not uniform, and, furthermore, a growth density of the carbon nanotubes per unit area is not as well uniform, it is impossible to obtain a display having uniform brightness in a large area thereof due to a variation in individual electron emission abilities.

Additionally, in the case of using a conventional carbon nanotube assembly as a catalyst supporting material for photocatalyst particles and platinum catalyst particles comprising a fuel-cell negative electrode, since the diameter of the tubes, the number of graphene sheets, and a growth density are not controlled, an amount of catalyst supported per unit area cannot be controlled, resulting in inability to fully exhibit a catalytic action.

The present invention aims to solve the above-described problems, and provides: a method for producing a carbon nanotube assembly, the method enabling not only control of the diameter of the tubes and the number of graphene sheets but also control of a growth density; a catalyst particle dispersed film for growth of carbon nanotubes; and a carbon nanotube assembly having both the number of graphene sheets and the growth density being controlled.

In the present invention, a method has been developed for producing a carbon nanotube assembly, having a uniform number of graphene sheets, while controlling even the growth density of the carbon nanotube assembly, by controlling the particle diameter and a deposition density of catalyst particles.

The method for producing a carbon nanotube assembly of the present invention is a method for producing a carbon nanotube assembly, the method controlling a growth density of the carbon nanotubes on a substrate. The method includes: a step for preparing a catalyst particle dispersed film-formed substrate including a catalyst particle dispersed film in which metal catalyst particles having a predetermined particle diameter are dispersed among barrier particles; and a thermal CVD step for growing carbon nanotubes from the metal catalyst particles serving as starting points by heat decomposition of an organic compound vapor.

In the method for producing a carbon nanotube assembly of the present invention, the step for preparing the catalyst particle dispersed film-formed substrate is preferably a catalyst deposition step for forming the catalyst particle dispersed film by causing metal catalyst particles and barrier particles to deposit on a substrate.

Moreover, the method for producing a carbon nanotube assembly of the present invention preferably further includes a reducing step for performing a reduction treatment on the metal catalyst particles in the catalyst particle dispersed film in a reducing atmosphere.

The catalyst particle dispersed film of the present invention is a catalyst particle dispersed film used for production of a carbon nanotube assembly by a thermal CVD method. The catalyst particle dispersed film contains metal catalyst particles having a predetermined particle diameter dispersed among barrier particles.

The barrier particles related to the present invention are preferably inorganic compound particles, and the inorganic compound particles more preferably comprise an oxide containing at least one selected from the group consisting of an aluminum oxide, a magnesium oxide, a titanium oxide, and a silicon oxide.

Meanwhile, the metal catalyst particles related to the present invention preferably comprise either an alloy of or a mixture of at least one particulate main catalyst selected from the group consisting of Fe, Co, and Ni, and at least one particulate auxiliary catalyst selected from the group consisting of high-melting point metals having a melting point of 1500°C or higher.

Furthermore, the catalyst particle dispersed film related to the present invention is preferably formed by a simultaneous sputtering method targeting a catalytic metal and an inorganic compound.

In the method for producing a carbon nanotube assembly of the present invention described above, by adjusting a particle diameter of metal catalyst particles to be in a predetermined range according to a desired number of graphene sheets, a carbon nanotube assembly having a uniform number of graphene sheets can be obtained.

To be more specific, in order to selectively produce single-walled carbon nanotubes, the particle diameters of metal catalyst particles in the catalyst particle dispersed film formed on the substrate are each preferably set to 8 nm or less.

In order to selectively produce double-walled carbon nanotubes, the particle diameters of metal catalyst particles in the catalyst particle dispersed film formed on the substrate are each preferably set to from 8 nm to 11 nm.

In order to selectively produce triple-walled carbon nanotubes, the particle diameters of metal catalyst particles in the catalyst particle dispersed film formed on the substrate are each preferably set to from 11 nm to 15 nm.

In order to selectively produce quad-walled carbon nanotubes, the particle diameters of metal catalyst particles in the catalyst particle dispersed film formed on the substrate are each preferably set to from 15 nm to 18 nm.

In order to selectively produce quint-walled carbon nanotubes, the particle diameters of metal catalyst particles in the catalyst particle dispersed film formed on the substrate are each preferably set to from 18 nm to 21 nm.

Moreover, in the method for producing a carbon nanotube assembly of the present invention, by controlling metal catalyst particles in its deposition density in addition to its particle diameter, a carbon nanotube assembly having a uniform number of graphene sheets can be produced while controlling even the growth density of the carbon nanotube assembly.

To be more specific, the growth density of the carbon nanotubes is preferably controlled by controlling a compounding ratio of metal catalyst particles and barrier particles in the catalyst particle dispersed film. Accordingly, the growth density of the carbon nanotubes can be controlled in a range from $10^9$ to $10^{11}$ tubes/cm$^2$.

By developing the above production method, the present inventors successfully produced a carbon nanotube assembly having a uniform number of graphene sheets, while controlling even the growth density of the carbon nanotube assembly.

Specifically, the carbon nanotube assembly of the present invention is described as the following (i) to (iv).

(i) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of double-walled carbon nanotubes to carbon nanotubes contained in the assembly is 50% or above.

(ii) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of triple-walled carbon nanotubes to the carbon nanotubes contained in the assembly is 50% or above.

(iii) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of quad-walled carbon nanotubes to the carbon nanotubes contained in the assembly is 50% or above.

(iv) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of quint-walled carbon nanotubes to the carbon nanotubes contained in the assembly is 50% or above.

Furthermore, in the present invention, it is possible to preferably obtain the carbon nanotube assemblies described in the above (i) to (iv) in which the growth directions of carbon nanotubes are oriented uniformly in a normal line direction with respect to the surface of the substrate.

In addition, the carbon nanotube assembly of the present invention may be a catalyst-supporting carbon nanotube assembly by further including catalyst particles. An example of such catalyst particles is a photocatalyst particle. To be more specific, in the case where the photocatalyst is titanium oxide and a growth density of the carbon nanotubes is $10^9$ to $10^{11}$ tubes/cm$^2$, obtained is a catalyst-supporting carbon nanotube assembly which demonstrates photocatalytic ability in response to visible light having a wavelength of 550 nm or shorter.

Moreover, the electron emitting element of the present invention uses the carbon nanotube assembly of the present invention as an electron source.

In addition, the field emission display of the present invention is a field emission display having: an emitter electrode; an electron source being provided on the emitter electrode and emitting electrons by a field emission phenomenon; a phosphor emitting fluorescence due to collision of electrons emitted from the electron source; and a insulator preventing discharge between the electron source and its adjacent electron source. The field emission display uses the carbon nanotube assembly of the present invention as the electron source.

According to a catalyst particle dispersed film for producing the carbon nanotube assembly of the present invention, a desired catalyst particle diameter can be maintained even at high temperature in the reduction step and the CVD step. Accordingly, it is possible to produce a carbon nanotube assembly having a high proportion of desired n-walled carbon nanotubes. In other words, it is possible to produce an assembly of carbon nanotubes having uniform characteristics. Furthermore, according to the present invention, catalyst particles serving as carbon nanotube growth nuclei can be adjusted in terms of the particle diameter and the deposition density per unit area of the surface of the substrate in the step for forming catalyst particles, and the particle diameter and the deposition density of the catalyst particles can be maintained as well in the CVD step. Therefore, an assembly of n-walled carbon nanotubes at a desired growth density can be obtained.

When the carbon nanotube assembly of the present invention which has a desired growth density and a uniform number of graphene sheets is used as an electron emitting source for field emission, uniformity of brightness is improved. Meanwhile, when the assembly is used as a supporting material for photocatalyst particles or platinum catalyst particles for a fuel cell, the particles can be dispersed and supported without aggregating; thus, high catalytic efficiency can be achieved.

## Brief Description of the Drawings

[FIG. 1] FIG. 1 is a schematic view showing a configuration of an example of a simultaneous sputtering apparatus preferably used in the present invention.

[FIG. 2] FIG. 2 is a schematic view showing a configuration of an example of a thermal CVD apparatus preferably used in the present invention.

[FIG. 3] FIGs. 3(a) to (c) each are a schematic view conceptually showing a formation of catalyst particles on a substrate at the time of deposition of the catalyst particles.

[FIG. 4] FIG. 4 is an SEM photograph showing a formation of a vertically oriented carbon nanotube assembly produced in a preferred embodiment.

[FIG. 5] FIG. 5 is an SEM photograph showing a pattern of a base part from which the carbon nanotube assembly produced in the preferred embodiment grows.

[FIG. 6] FIG. 6 is a graph showing a relationship between a duty ratio, which is a simultaneous sputtering condition, and a growth density of the carbon nanotube assembly.

[FIG. 7] FIG. 7 is a graph showing a relationship between a growth density and photocatalytic ability of an assembly of carbon nanotubes on which photocatalyst particles are supported.

[FIG. 8] FIGs. 8 (a) to (c) each are a schematic view conceptually showing a formation of an assembly of carbon nanotubes on which photocatalyst particles are supported.

[FIG. 9] FIG. 9 is a schematic view conceptually showing a field emission display apparatus which uses a carbon nanotube assembly as an electron emitting element.

## Detailed Description of the Preferred Embodiments

A preferred method for producing the carbon nanotube assembly of the present invention includes a catalyst particle forming step, a reduction step, and a CVD step. The catalyst particle forming step is a step for forming catalyst particles on a substrate. The reduction step is a step for conferring catalytic activity by reducing the catalyst particles. The CVD step is a step for growing carbon nanotubes from catalyst particles serving as starting points.

A preferred embodiment of a method for producing a carbon nanotube assembly related to the present invention will be described below for each of the steps.

<Catalyst particle forming step>

Firstly, a substrate is prepared. For a material of the substrate, silica glass, single-crystal silicon, various ceramics, and metals can be used. Substrates of any size and any thickness may be used. However, when the heat capacity of a substrate is large, it tends to be technically difficult to rapidly heat catalyst particles during and after the reduction step. For this reason, the thickness of the substrate is preferably 5 mm or less.

After preparing the substrate, in order to uniformly form catalyst particles having a desired particle diameter, it is preferable to perform precision cleaning, as a pretreatment, with a detergent, water, an alcohol-base solvent, or the like under ultrasonic vibration.

Next, a configuration of a metal catalyst particle will be described. The configuration of the metal catalyst particle is either a mixture of or an alloy of: catalyst particles (particulate main catalyst) acting as a catalyst for promoting growth of the carbon nanotubes; and particles (particulate auxiliary catalyst) for preventing the particulate main catalyst from aggregating with each other to cause grain growth in the reduction step involving heat application. It should be noted that, in the thermal CVD method using catalyst particles, maintaining the particle diameters of the catalyst particles is important for controlling the shape of the carbon nanotubes. In addition to the particulate main catalyst directly acting as a catalyst for causing the carbon nanotubes to grow, the above-described particulate auxiliary catalyst, although not having an action for directly causing the carbon nanotubes to grow, are added for preventing the particulate main catalyst from aggregating with each other.

As for the particulate main catalyst, it is preferable to use at least one metal selected from the group consisting of Fe, Co, and Ni. As for the particulate auxiliary catalyst, it is preferable to use at least one high melting point metal selected from the group consisting of high melting point metals having a melting point of 1500°C or above {for example, Mo (molybdenum, melting point 2620°C), W (tungsten, melting point 3400°C), Ta (tantalum, melting point 3027°C), Re (rhenium, melting point 3100°C), Os (osmium, melting point 3045°C), Ir (iridium, melting point 2454°C), Pt (platinum, melting point 1772°C), Hf (hafnium, melting point 2222°C), Rh (rhodium, melting point 1966°C), Pd (palladium, melting point 1555°C), Ru (ruthenium, melting point 2500°C), Tc (technetium, melting point 2172°C), Nb (niobium, melting point 2415°C), Zr (zirconium, melting point 1852°C), and Y (yttrium, melting point 1520°C)}. It should be noted that the metal catalyst particle related to the present invention may be either an alloy of or a mixture of the particulate main catalyst and the particulate auxiliary catalyst.

In the metal catalyst particle related to the present invention, two or more kinds of the particulate main catalyst may be used at once. In such a case, such particulate main catalyst is to act as an particulate auxiliary catalyst of each other; therefore, the particulate auxiliary catalyst may not be necessarily used.

Furthermore, in the present invention, in order to adjust a deposition density of the metal catalyst particles on a substrate and thereby to control a growth density of carbon nanotubes, barrier particles are used in addition to the above-described metal catalyst particles. As such barrier particles, inorganic compound particles are preferred. Among these, it is particularly preferable to use particles each comprising at least one oxide selected from the group consisting of high melting point inorganic compounds (for example, an aluminum oxide, a magnesium oxide, a titanium oxide, and a silicon oxide) which are unlikely to cause a chemical reaction with the main catalytic metals. It should be noted that the particle diameter of the barrier particles is not particularly limited, and properly selected according to a desired deposition density of the metal catalyst particles and the like. However, it is generally preferred to be approximately from 2 to 50 nm.

In the catalyst particle forming step related to the present invention, a so-called simultaneous sputtering method is preferably used which is capable of causing more than 2 kinds of fine particles to be deposited at a certain compounding ratio on a substrate. By controlling the particle diameter, particle diameter distribution, and degree of distribution of the metal catalyst particles with this method, a catalyst particle dispersed film of the present invention can be prepared in which the metal catalyst particles having a desired particle diameter are dispersed among the barrier particles at a desired deposition density.

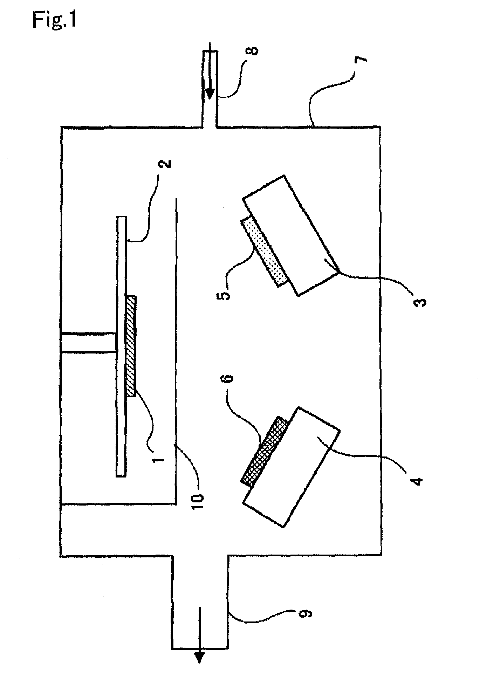

FIG. 1 is a schematic view of an example of a simultaneous sputtering film forming apparatus. In FIG. 1, 1 represents a substrate, 2 represents a substrate holder, 3 and 4 represent sputtering cathodes, 5 represents a target A, 6 represents a target B, 7 represents a film forming chamber, 8 represents a gas inlet, 9 represents a exhaust outlet, and 10 represents a shutter.

In the present embodiment, an inorganic compound sintered compact is used as the target A, and a main catalyst/auxiliary catalyst composite metallurgic powder metallurgic sintered compact is used as the target B. The target A and the target B are respectively connected to different high-frequency power sources. By changing high-frequency power applied to the individual targets, a sputtering ratio of the individual targets can be adjusted. In addition, varying a ratio of power-on period/ power-off period, which is a duty ratio, by performing pulse control on the period when high frequency is applied to the individual target (power-on period) and the period of no application (power-off period) enables adjustment of the sputtering ratio of the individual targets. The sputtering ratio referred here is an amount of a target material sputtered in a unit of time.

By independently controlling sputtering ratios of the target A and the target B so as to sputter them simultaneously, the barrier particles and the main catalyst/auxiliary catalyst alloy particles can be deposited on the substrate at a certain compounding ratio. The particle diameters of the respective particles are adjustable with sputtering conditions, and the particle diameters can be made smaller by applying less electric power to a target while shortening a discharge period. To be more specific, adjustment may be made in a range of electric power density of from approximately 0.2 to 1 W/cm$^2$ in a range of discharging period of from several seconds to several tens of seconds.

Incidentally, if a catalyst particle dispersed film-formed substrate including a catalyst particle dispersed film in which metal catalyst particles having a predetermined particle diameter are dispersed among barrier particles is prepared in advance, the above catalyst deposition step can be omitted.

In addition, for obtaining a catalyst particle dispersed film, although a simultaneous sputtering method for sputtering the barrier particles and the main catalyst/auxiliary catalyst particles is preferable, a method for alternately sputtering them may also be used.

<Apparatus used in the reduction and CVD steps>

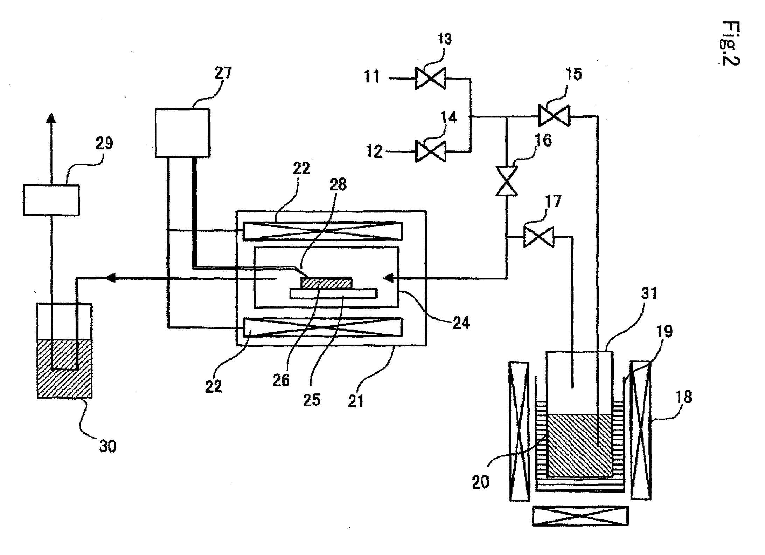

In the present embodiment, a catalyst particle dispersed film-formed substrate including a catalyst particle dispersed film in which the metal catalyst particles are dispersed among the barrier particles is subjected to the reduction step and CVD step, which will be described later. FIG. 2 is an example of an apparatus enabling the reduction step and CVD step in the method for producing the carbon nanotube assembly related to the present invention. At the center of a reactor 21, there is arranged a furnace tube 24 in which vacuum exhaust and gas displacement can be performed. At the outside of the furnace tube 24, there is provided radiant heaters 22 having a peak of the spectral energy distribution in a range of wavelength of from 1.0 $\mu$m to 1.7 $\mu$m so that a substrate 26 on a substrate holder 25 arranged in the interior of the furnace tube 24 can be heated uniformly and rapidly. The temperature of the substrate 25 is measured with a thermometer 28. Electric power supply to the heaters 22 is controlled by use of a controlling unit 27 so as to achieve a predetermined temperature programmed in advance.

In the outside of the reactor 21, there are a reducing gas supply line 11 and an inert gas supply line 12, and the gases are supplied to the production apparatus through a valve 13 and a valve 14, respectively. The gas flow rate of each of the gases can be controlled to be a constant value by a flow-rate control mechanism (not shown in the drawing), such as a mass flow controller.

A reducing gas and an inert gas are supplied to the interior of a raw material container 31 through a valve 15. The raw material container 31 is configured to be heatable to a predetermined temperature by the heater 18 and a water bath 19 so that vapor of a raw material 20 filled in the interior can be created at a constant vapor pressure. The raw material vapor generated in the interior of the raw material container 31 is supplied to the furnace tube 24 in the reactor 21 through the valve 17 either with the reducing gas or inert gas supplied through the valve 15 or alone. At this time, by appropriately adjusting an opening of the valve 16, supply amounts of the reducing gas, the inert gas, and the organic compound vapor can be independently controlled.

The above-described individual gases supplied to the furnace tube 24 are used for either a reduction reaction of the catalyst particles on the substrate arranged in the furnace tube or a growth reaction of the carbon nanotubes on the catalyst particles. Exhaust gas containing by-products and the like is discharged out of the system through an abatement unit 30, such as a cold trap, and an exhaust unit 29, such as an oil-sealed rotary pump. It should be noted that a production apparatus having the configuration shown in FIG. 2 can be used not only in the reduction step but also in the CVD step following thereafter.

<Reduction step>

The metal catalyst particles formed on the substrate are often oxidized on the surface thereof. Accordingly, with such metal catalyst particles as they are, it is difficult to grow a carbon nanotube assembly uniformly. For this reason, in such a case, it is necessary to perform a reduction treatment on the surface of the metal catalyst particles before growing carbon nanotubes.

Reduction of the surface of the catalyst particles is preferably carried out by storing a substrate having the main/auxiliary catalyst particles and the barrier particles formed thereon in a reactor (thermal CVD furnace), discharging the reactor using an oil-sealed rotary pump to reach, for example, 0.4 Pa, and then heating the substrate at a reduction temperature of approximately 300°C or above under a pressure of approximately from 0.1 Pa to $10^5$ Pa (for example, $7 \times 10^4$ Pa) while flowing a reducing gas, such as hydrogen gas. Moreover, the reduction temperature may be set to a temperature above 450°C; however, in such a case, length of period, including the next CVD step, passing before initiation of growth of carbon nanotubes is desirably set to 600 seconds or less, more preferably 300 seconds or less. This is because, if it exceeds 600 seconds, the aggregation state of the catalyst particles goes beyond its limit; thus, it is likely to be impossible to selectively produce only n-walled carbon nanotubes. Under such a condition, it is difficult to actually cause the reduction reaction to sufficiently proceed. Therefore, the reduction reaction is desirably carried out at 400°C or less at which the catalyst particles do not aggregate. In other words, by setting the reduction temperature to from 300°C to 400°C, the reduction reaction is likely to be caused to sufficiently proceed without causing the metal catalyst particles to aggregate, and thereby a carbon nanotube assembly having a uniform number of graphene sheets is likely to be produced.

If the metal catalyst particles each having a surface thereof in an active state are formed on a substrate in advance, the reduction step is unnecessary, and the operation may be started from the next CVD step. For example, in the case where catalyst particles are not taken out to an atmosphere after having been formed by sputtering and subsequently subjected to the CVD step, the surfaces of the catalyst particles are considered to be in a reducing condition. For this reason, the reduction step can be omitted for some production conditions.

Although the particulate main catalyst and the particulate auxiliary catalyst in the catalyst particle dispersed film immediately after the formation of the sputtered film are in an unstable bonding state, the particulate main catalyst tends to be alloyed with adjacent particulate auxiliary catalyst in the reduction step. By alloying with the particulate auxiliary catalyst which are a high melting point metal, the particulate main catalyst can be prevented from aggregating with each other to cause grain growth. Therefore, even at high temperature, the particle diameter of the alloy catalyst particles is easily maintained to be small.

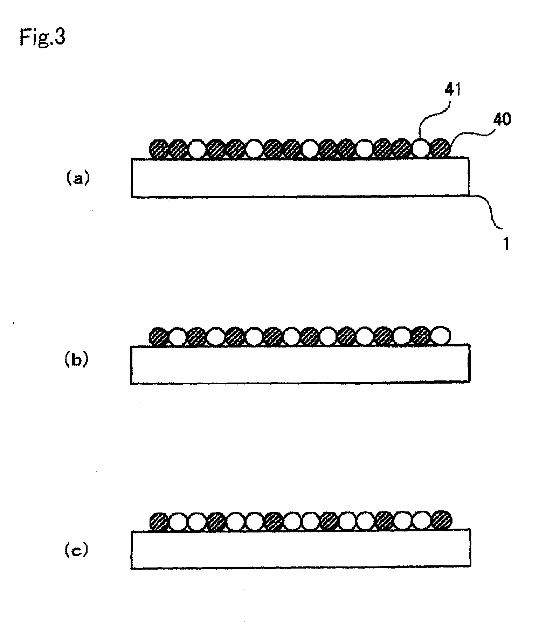

FIGs. 3 are a formation conceptual view of the metal catalyst particles and the barrier particles on the substrate after the completion of the reduction step immediately before initiation of the CVD step. In the drawing, shaded particles 40 represent main/auxiliary catalyst alloy particles (metal catalyst particles) and white particles 41 represent the barrier particles. By adjusting the duty ratio of the individual targets, it is possible to change the compounding ratio between the catalyst alloy particles and the barrier particles deposited on the substrate as shown in FIGs. 3(a), (b), and (c). In other words, a deposition density of the catalyst particles can be controlled. Then, by controlling the compounding ratio between the metal catalyst particles and the barrier particles in the catalyst particle dispersed film in such way, it is possible to control a growth density of carbon nanotubes in the CVD step described below in a range, for example, from $10^9$ to $10^{11}$ tubes/cm$^2$.

<Thermal CVD step>

In the present embodiment, with the metal catalyst particles, having been reduced in the reduction step, serving as starting points, carbon nanotubes are caused to grow by heat decomposition of an organic compound vapor. In addition, it is preferable that the reduction step and the CVD step be carried out sequentially by the same apparatus. This is because, when the reduced catalyst particles are exposed to an oxidizing atmosphere, such as atmospheric air, they are again oxidized, and the catalytic activity is decreased, resulting in making it difficult to cause carbon nanotubes to grow therefrom.

In order to grow the carbon nanotubes on the catalyst particles, the catalyst particles are heated to a predetermined reaction temperature, and brought in contact with the organic compound vapor. In the following section, a procedure in the case of using the apparatus in FIG. 2 will be described as an example of the CVD step.

After the reduction is caused on the surfaces of the catalyst particles on the substrate 26 in the previous step, or after formation of catalyst particles which are not necessary to be reduced on the substrate 26, the catalyst particles are heated to a predetermined reaction temperature. Although the reaction temperature varies according to kind of catalytic metal and kind of organic compound used as a raw material, for example, approximately 600°C to 1000°C is preferred in the case of using ethanol as a raw material, and approximately 700°C to 1200°C is preferred in the case of using methane as a raw material.

In this case, if the reaction temperature is lower than 500°C, there arises a problem that the growth of amorphous carbon becomes predominant, resulting in a lower yield of the carbon nanotubes. On the other hand, if the reaction temperature is set to a temperature higher than 1300°C, a material that is resistant to high temperature has to be used as a construction material for the substrate and the reactor, resulting in increased restriction of the apparatus. Therefore, in the present invention, the reaction temperature in the thermal CVD step is preferably 500°C or higher, and if it is also 1300°C or lower, it is more preferable.

An atmosphere during the temperature rise may remain to be a reducing atmosphere, or may be substituted so as to be an inert gas atmosphere, such as a noble gas. What is important is to set the period in which the temperature of the catalyst particles exceeds 450°C to 600 seconds or shorter, more preferably 300 seconds or shorter, during the period before initiation of growth of the carbon nanotubes. This upper limit period includes the period in which the temperature exceeds 450°C in the previous step. This is because the catalyst particles start to aggregate regardless of the atmosphere unless the carbon nanotubes start to grow when the temperature of the catalyst particles exceeds 450°C.

In order to elevate the temperature of the catalyst particles to a predetermined reaction temperature and further to cause the carbon nanotubes to start growing within such a limited period, it is necessary to rapidly increase the temperature of the catalyst particles. As means for achieving a required rate of temperature rise, the radiation heater 22 having a peak of the energy spectral distribution in a range of wavelength of from 1.0 $\mu$m to 1.7 $\mu$m is provided in the production apparatus shown in FIG. 2. By using this heater 22, it is possible to rapidly heat the catalyst particles to be heated and the substrate 26 on which the catalyst particles are formed.

After heating the catalyst particles up to a predetermined reaction temperature by using the above heating means, the organic compound vapor serving as a raw material of the carbon nanotubes is introduced into the furnace tube 24 in the reactor 21 to maintain the internal pressure of the furnace tube 24 preferably in a range from 10 Pa to 10 kPa, more preferably to 1 kPa.

As an organic compound serving as a raw material for the carbon nanotubes, it is possible to use any one of: at least one compound selected from the group consisting of methane, ethane, propane, butane, ethylene, and acetylene, which are straight-chain hydrocarbons; at least one compound selected from the group consisting of methanol, ethanol, and propanol, which are straight-chain monohydroxy alcohols; and at least one compound selected from the group consisting of benzene, naphthalene, and anthracene, and derivatives thereof, which are aromatic hydrocarbons. Other than these compounds, it is possible to use an organic compound as a raw material with which the carbon nanotubes can be generated on fine metallic particles.

When the organic compound vapor is introduced into the reactor, the carbon nanotubes immediately start to grow if the temperature of the catalyst particles has reached a predetermined reaction temperature. Once the growth of the carbon nanotubes starts, the surfaces of the catalyst particles are covered with the raw material compound, reaction intermediates, carbon, and the like. Accordingly, even if the reaction temperature exceeds 450°C, no further aggregation of the catalyst particles would proceed. Therefore, the same particle diameter at the time of the initiation of growth can be maintained, and carbon nanotubes, having the number of graphene sheets which corresponds to the particle diameter, grow continuously.

Next, after the carbon nanotubes having a desired length have grown on the catalyst particles, the supply of the organic compound vapor is stopped, the temperature inside of the reactor 21 is returned to room temperature, and then the substrate having a carbon nanotube assembly formed on its surface is taken out.

<Examination of catalyst particle diameter and number of graphene sheets>

As will be described in detail in the following examples, the carbon nanotube assembly produced in the above steps was examined. As a result, the following has been revealed. To be more specific, in order to obtain a desired number of graphene sheets at a high yield, the particle diameters of the metal catalyst particles on the substrate immediately before the CVD step are to be set to 8 nm or less in the case of single-walled carbon nanotubes, to a range from 8 to 11 nm in the case of double-walled carbon nanotubes, to a range from 11 to 15 nm in the case of triple-walled carbon nanotubes, to a range from 15 nm to 18 nm in the case of quad-walled carbon nanotubes, and to a range from 18 nm to 21 nm in the case of quint-walled carbon nanotubes.

The particle diameters of the metal catalyst particles and the barrier particles related to the present invention were values measured as described below. To be more specific, immediately before the carbon nanotubes start to grow at the time of reaching a predetermine reaction temperature after the reduction step has completed with heating of the metal catalyst particles and the barrier particles formed on the substrate, the substrate is rapidly cooled to room temperature without introduction of an organic compound vapor, and then the metal catalyst particles and the barrier particles on the substrate were observed using a scanning electron microscopy (hereinafter referred to as SEM). In other words, the diameters of the metal catalyst particles and the barrier particles, which have gone through the reduction step, were observed at the exact moment immediately before the growth of the carbon nanotubes starts. Then, the particle diameter of each of the reduced metal catalyst particles and barrier particles, which are observed in white in an SEM image, were measured using a ruler. In this case, the particle diameters of the metal catalyst particles and the barrier particles each indicate a value of a short diameter in the case where the outer shape of these individual particles is not a perfect spherical shape. The SEM used for observation in examples to be described below was an S-5000H type manufactured by Hitachi Ltd., and the acceleration voltage was 5 kV, and the observation magnification was 200k times.

Next, in order to check the number of graphene sheets of the individual carbon nanotubes composing the carbon nanotube assembly, carbon nanotubes were mechanically collected from a region of 10 mm $\times$ 10 mm on the substrate, and placed on a copper mesh for observation for evaluation using a transmittance electron microscope (hereinafter referred to as TEM). The TEM used for observation in examples to be described below was an HF-2000 type manufactured by Hitachi Ltd. , and the acceleration voltage was 200 kV, and the observation magnification was 400k times.

Moreover, in the present embodiment, in addition that the number of graphene sheets is controlled by adjustment of the particle diameters of the metal catalyst particles, a deposition density of the metal catalyst particles on the substrate is controlled by using the above-described barrier particles. Accordingly, it is possible to obtain the following carbon nanotube assemblies (i) to (iv) of the present invention in which the growth density of the carbon nanotubes is controlled and the number of graphene sheets is uniform.

(i) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of double-walled carbon nanotubes to carbon nanotubes contained in the assembly is 50% or above.
(ii) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of triple-walled carbon nanotubes to the carbon nanotubes contained in the assembly is 50% or above.
(iii) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of quad-walled carbon nanotubes to the carbon nanotubes contained in the assembly is 50% or above.
(iv) A carbon nanotube assembly, which is an assembly of carbon nanotubes directly grown on a substrate, in which a growth density of the carbon nanotubes is in a range from $10^9$ to $10^{11}$ tubes/cm$^2$, and in which a proportion of quint-walled carbon nanotubes to the carbon nanotubes contained in the assembly is 50% or above.

Furthermore, the above-described carbon nanotube assemblies in (i) to (iv) of the present invention can be preferably obtained in which the growth directions of the carbon nanotubes are oriented uniformly in a normal line direction with respect to the surface of the substrate.

**Examples**

Hereinafter, the present invention will be described more concretely on the basis of preliminary test, Examples and Comparative Examples. However, the present invention is not limited to the following Examples.

(Preliminary test)

It has been revealed that the number of graphene sheets of the individual carbon nanotubes is determined by the particle diameters of the metal catalyst particles at the initiation of the growth in the case where the carbon nanotubes grow from the metal catalyst particles, serving as starting points, on the substrate. Therefore, firstly, the result of detailed investigation on the relationship between the catalyst particle diameter and the number of graphene sheets of the grown carbon nanotubes will be described.

A powder metallurgic target of main catalytic metal Fe-auxiliary catalytic metal W was attached in the film forming chamber of the sputtering apparatus described in FIG. 1. A silica glass substrate was arranged on the substrate holder, and the inside of the film forming chamber was discharged to a high vacuum of $1 \times 10^{-4}$ Pa. Argon gas was introduced to the film forming chamber, and the pressure was adjusted to 2 Pa. Plasma was generated by applying a high frequency of 13.56 MHz to a cathode, to which the Fe-W target was attached, so as to sputter the Fe-W target by itself to form a film of Fe-W particles (metal catalyst particles) on the silica glass substrate. By varying the thickness of the sputtered film, the diameter of particles to be deposited on the substrate was controlled. Since the film thickness was extremely thin, no continuous film was formed in fact, but particles were deposited in an island shape. In short, although not representing the particle diameter of the catalyst particles deposited on the substrate, the sputtered film thickness is a necessary parameter for sputtering while controlling the particle diameter.

Here, the sputtered film thickness will be described. A desired sputtered film thickness can be set as follows.

I. Sputtered film formation was performed on a spare silica glass substrate for 60 minutes.
II. The film thickness of a thick continuous film obtained in the 60-minute film formation was accurately measured by using a step measuring device (although depending on film forming conditions and target kinds, the film thickness was in a range from 150 to 200 nm).
III. A deposition rate was calculated using an equation:

$$\texttt{deposition rate (nm/s) = film thickness (nm)/3600 (s).}$$

IV. On a silica glass substrate prepared for synthesis of the carbon nanotubes, sputtered film formation was performed for a period of film formation (several tens of seconds) which has been calculated using an equation:

$$\texttt{desired sputtered film thickness (nm) = period of film}$$

$$\texttt{formation (s)} \times \texttt{deposition rate (nm/s).}$$

To be more precise, firstly, on the substrates, metal catalyst particles (Fe-W particles) were formed into individual films having respective sputtered film thicknesses shown in Table 1. Next, the substrates on which the individual sputtered films formed in respective film thicknesses were stored in the CVD apparatus described in FIG. 2. After the interior thereof is discharged to 0.4 Pa, the substrates were heated to 400°C under a pressure of $7 \times 10^4$ Pa while flowing a hydrogen gas, and this state was held for 30 minutes to carry out the reduction treatment.

After the completion of the reduction step, the interior of the furnace was consecutively heated. At the time when the CVD initiation temperature of 800°C was reached, the substrates were rapidly cooled down without performing CVD (in other words, without introducing the organic compound vapor). SEM images of the metal catalyst particles on the substrates which had been back to room temperature were taken, and an average of short diameters measured on individual particles was used as an average particle diameter of the metal catalyst particles immediately before the initiation of CVD. In Table 1, sputtered film thicknesses and respective average particle diameters of the metal catalyst particles immediately before the initiation of CVD are shown. It was observed that the average particle diameter increased as the sputtered film thickness increased.

[Table 1]

| Fe-W sputtered film thickness (nm) | Average particle diameter of Fe-W alloy particles (nm) | Proportions of specific carbon nanotubes in a synthesized carbon nanotube assembly | | | | | |
|---|---|---|---|---|---|---|---|
| | | Proportion of single-walled carbon nanotubes (%) | Proportion of double-walled carbon nanotubes (%) | Proportion of triple-walled carbon nanotubes (%) | Proportion of quad-walled carbon nanotubes (%) | Proportion of quint-walled carbon nanotubes (%) | Proportion of multi-walled carbon nanotubes (%) |
| 0.1 | 4.6 | 100 | 0 | 0 | 0 | 0 | 0 |
| 0.2 | 6.4 | 100 | 0 | 0 | 0 | 0 | 0 |
| 0.4 | 9.2 | 6 | 81 | 13 | 0 | 0 | 0 |
| 0.6 | 12.5 | 0 | 12 | 72 | 13 | 3 | 0 |
| 0.7 | 15.3 | 0 | 4 | 7 | 61 | 19 | 9 |
| 0.8 | 17.4 | 0 | 0 | 0 | 19 | 54 | 27 |

Next, additional silica glass substrates were freshly prepared, and Fe-W particles (metal catalyst particles) were formed thereon into individual films having respective sputtered film thicknesses described in Table 1. Consecutively, the substrates on which individual sputtered films had been formed in respective sputtered film thicknesses were stored in the CVD apparatus described in FIG. 2, and the above-described reduction step was carried out. Thereafter, at a point when the temperature of the inside of the furnace was raised to 800°C, ethanol vapor was introduced, and then the CVD step was performed for 30 minutes to grow the carbon nanotubes. The temperature and pressure during performing the CVD were constant of 800°C and 1 kPa, respectively.

The carbon nanotube assemblies thus obtained having various average particle diameters of the metal catalyst particles and having grown on respective substrates were observed using TEM. In the TEM observation, the number of graphene sheets in a total of 100 carbon nanotubes which were randomly extracted, and proportions of carbon nanotubes having respective specific numbers of graphene sheets was calculated. The average particle diameters of the metal catalyst particles immediately before the initiation of CVD and the proportions of carbon nanotubes having respective specific numbers of graphene sheets in the synthesized carbon nanotube assembly are summarized in Table 1. According to Table 1, it was observed that, regarding carbon nanotubes grown more preferentially as the particle diameter of the metal catalyst particles increases, the number of graphene sheets increased by one layer in an order of single-walled carbon nanotubes, to double-walled carbon nanotubes, triple-walled carbon nanotubes, quad-walled carbon nanotubes, quad-walled carbon nanotubes, and quint-walled carbon nanotubes. Furthermore, as the particle diameter of the metal catalyst particles increased, the maximum value of a proportion of carbon nanotubes having a specific number of graphene sheets in the carbon nanotube assembly gradually decreased from 100% for single-walled carbon nanotubes, to 81% for double-walled carbon nanotubes, 72% for triple-walled carbon nanotubes, 61% for quad-walled carbon nanotubes, and 54% for quint-walled carbon nanotubes.

Next, an $Al_2O_3$ target was attached in the film forming chamber in the sputtering apparatus described in FIG. 1. Then, additional silica glass substrates were freshly prepared, and set on the substrate holders. Thereafter, the inside of the film forming chamber was discharged to a high vacuum of $1 \times 10^{-4}$ Pa. Argon gas was introduced to the film forming chamber, and the pressure was adjusted to 2 Pa. Plasma was generated by applying a high frequency of 13.56 MHz to a cathode, to which the $Al_2O_3$ target was attached, so as to sputter the $Al_2O_3$ target by itself to form a film of $Al_2O_3$ particles (barrier particles) on the silica glass substrates while selecting a period of film formation so as to obtain a desired sputtered film thickness.

Thereafter, the substrates on which films had been formed in respective sputtered film thicknesses were stored in the CVD apparatus described in FIG. 2, the above-described reduction step was carried out. Consecutively, at a point when the CVD initiation temperature of 800°C was reached by heating the inside of the furnace, the substrates were rapidly cooled down without performing CVD. SEM images of the $Al_2O_3$ particles on the substrates which had been back to room temperature were taken, and an average of short diameters measured on individual particles was used as an average particle diameter of the $Al_2O_3$ particles immediately before the initiation of CVD. In Table 2, sputtered film thicknesses and respective average particle diameters of the $Al_2O_3$ particles immediately before the initiation of CVD are shown. It was observed that the average particle diameter increased as the sputtered film thickness increased. In addition, chemical composition analysis of the $Al_2O_3$ particles after the reduction step was investigated by XPS, and it was found that Al atoms and O atoms were in an approximately stoichiometric ratio although O atoms were slightly deficient. Based on this, it was observed that, at a reduction temperature of approximately 400°C, the binding state of

$Al_2O_3$, which is a complete oxide, did not change, although the metal particles, such as Fe particles and W particles, were reduced.

[Table 2]

| $Al_2O_3$ sputtered film thickness (nm) | Average particle diameter of $Al_2O_3$ particles (nm) |
|---|---|
| 1.5 | 11.9 |
| 5 | 33.6 |

(Example 1)

A description will be given of an example in which catalyst particle dispersed films having various metal catalyst particle densities were formed on a silica glass substrate by the simultaneous sputtering method, and then, going through the reduction step and the CVD step, carbon nanotube assemblies which each have a high yield of double-walled carbon nanotubes and the growth density being controlled was produced.

An $Al_2O_3$ sintered compact was used as the target A, and a powder metallurgic target of Fe-W (Fe/W= 2/1) was used as the target B. Although the combination of Fe for the particulate main catalyst, W for the particulate auxiliary catalyst, and $Al_2O_3$ for the barrier particle was used in the present example, an equivalent effect can be obtained with a different combination of the above-described other metals.

When the catalyst particle dispersed film is formed so as to have the particle diameter of the metal catalyst particles immediately before the growth of carbon nanotubes of from approximately 9 to 10 nm, a highly-pure assembly of double-walled carbon nanotubes can be obtained. This is an observation obtained in the above preliminary test. Therefore, total periods of sputtered film formation for the respective targets of Fe-W and $Al_2O_3$ were set to the periods to achieve a Fe-W sputtered film thickness of 0.4 nm (average particle diameter of 9.2 nm) and an $Al_2O_3$ sputtered film thickness of 5 nm (average particle diameter of 33.6 nm), respectively.

In the film forming chamber in the sputtering apparatus described in FIG. 1, the silica glass substrate was stored, and the air was discharged to a high vacuum of $1 \times 10^{-4}$ Pa. In the forming chamber, Ar gas was introduced, and the pressure was adjusted to 2 Pa. Plasma was generated by applying a high frequency of 13.56 MHz to each of the targets A and B so as to sputter the targets. For each of the targets, after adjusting the duty ratio to a desired value, the shutter is opened so as to form a film having a desired compounding ratio of the $Al_2O_3$ particles (barrier particles) and the Fe-W particles (metal catalyst particles) on the substrate. The proportion of the mixed particles to be deposited was adjusted by changing the duty ratios of high frequencies applied to the individual targets. Since sputtering periods for respective targets vary, sputtering of the $Al_2O_3$ target was started prior to that of the Fe-W target so that the film formations can be completed at the same time. In addition, adjustment was carried out by changing the delay time for the initiation of sputtering of the Fe-W target with respect to the $Al_2O_3$ target so that the formations of films having any duty ratio can be completed at the same time.

As a result of SEM observation of the catalyst particle dispersed film formed on the substrate, a state in which the Fe-W particles are mixed and dispersed uniformly in the $Al_2O_3$ particles in the vicinity of the surface was observed. It should be noted that, although the average particle diameters of both of the particles after the reduction step did not change from the above set values, the particle diameter distribution was slightly wider than that of the case where the targets were individually sputtered.

Next, the substrate on which the catalyst particle dispersed film had been formed by the simultaneous sputtering method was stored in the CVD apparatus described in FIG. 2, and the above-described reduction step and the CVD step were performed to grow the carbon nanotube assembly. The conditions in the reduction step and the CVD step were the same as those in the preliminary test.

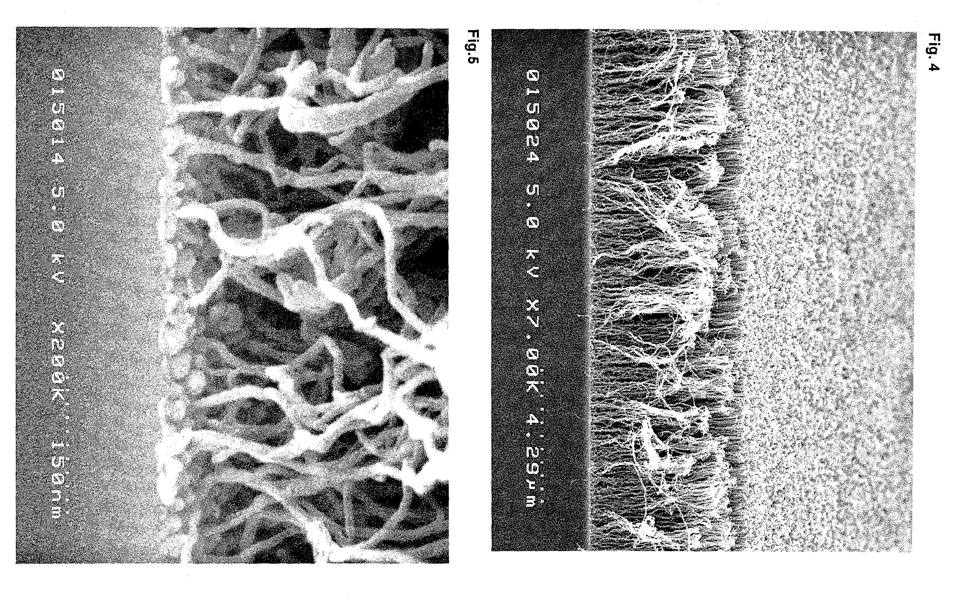

FIG. 4 is an SEM observation result of the carbon nanotube assembly formed on the silica glass substrate after the CVD step. According to FIG. 4, it was observed that the obtained carbon nanotubes grew in a in a vertical orientation with respect to the silica glass substrate.

In the meantime, FIG. 5 shows a result of SEM observation on a base part from which the carbon nanotubes shown in FIG. 4 were growing on the silica glass substrate. According to FIG. 5, it was observed that a carbon nanotube grew from a metal catalyst particle. In other words, this is a result indicating that a growth density of the carbon nanotubes on the substrate can be controlled by adjusting a deposition density of the metal catalyst particles on the substrate.

Furthermore, although the proportion of double-walled carbon nanotubes in the obtained carbon nanotube assembly changes depending on the duty ratio, the proportion was 50% or above in any case. Therefore, carbon nanotube assemblies each having an extremely high proportion of double-walled carbon nanotubes were successfully obtained.

In addition, multiple SEM images of the base from which the carbon nanotubes grew, which is shown in FIG. 5, were taken for one sample, and a growth density of the carbon nanotubes per unit area was calculated from the individual SEM images.

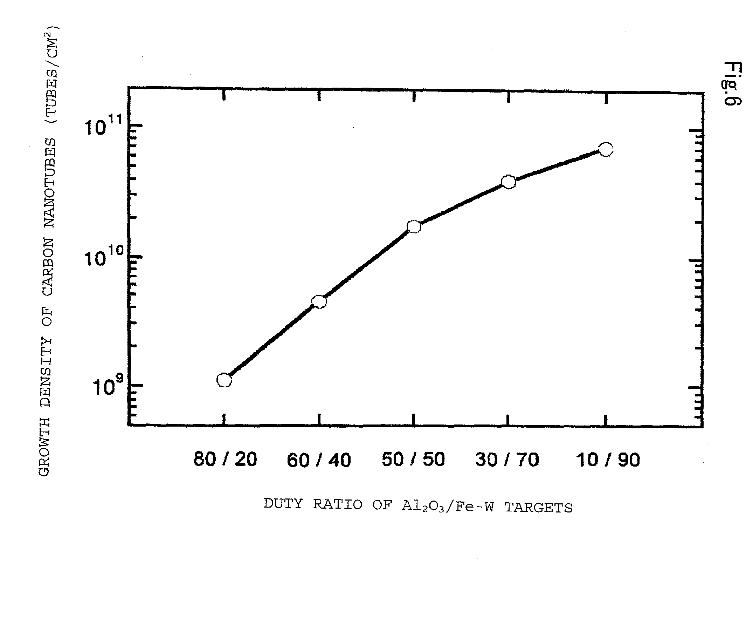

FIG. 6 is a graph showing the relationship between the combination of the duty ratios of the targets A and B and a growth density of the carbon nanotubes in the carbon nanotube assembly. It was observed that the growth density of the carbon nanotubes changed from $1.1 \times 10^9$ tubes/cm$^2$ to $7.1 \times 10^{10}$ tubes/cm$^2$ by changing the duty ratio of the $Al_2O_3$/Fe-W targets from 80/20 to 10/90.

As described above, it was observed that it is possible to easily obtain a carbon nanotube assembly having a desired number of graphene sheets and a desired growth density by preparing a catalyst particle dispersed film by the simultaneous sputtering method.

(Example 2)

A description will be given of an example in which photocatalyst particles were supported on the carbon nanotube assemblies, which were produced in Example 1, having a proportion of double-walled carbon nanotubes of 50% or above and being controlled to have various growth densities.

<Method for depositing photocatalyst particles>

A $TiO_{2-x}N_x$ powder (primary particle diameter of from 5 to 10 nm) having visible light responsiveness was dispersed in a propanol solvent at a proportion of 10 wt%. The obtained dispersion solution 100 ml was poured into a beaker. In the beaker containing the dispersion solution, five kinds of carbon nanotube assemblies prepared in Example 1 and described in FIG. 6 were immersed and left for one hour. Thereafter, the carbon nanotube assemblies were taken out, and dried at 100°C for 1 hour to support the photocatalyst $TiO_{2-x}N_x$ particles on the individual carbon nanotube assemblies. Each is called a photocatalyst element substrate. Although $TiO_{2-x}N_x$ in which the oxygen atom in the titanium oxide is partly substituted by a nitrogen atom, which is an anion, was used as the photocatalyst particle in the present example, any particles expressing a photocatalytic function may be used.

<Method for evaluating photocatalytic activity>

An aqueous methylene blue solution was prepared by dissolving methylene blue in pure water at a concentration of 1 ppm, and used as a test solution. The initial transmittance of the test solution was 60% at a wavelength of 644 nm.

Next, five petri dishes were prepared, and 50 ml of the test solution was poured to each of the petri dishes. In a dark room, the above-described five kinds of photocatalytic element substrates were respectively immersed in the petri dishes. After two hours, an aliquot of the test solution was collected from each of the petri dishes, and the transmittance of the aliquot was measured at a wavelength of 644 nm. Since a part of the methylene blue molecules is adsorbed to the photocatalyst $TiO_{2-X}N_x$ particles and the carbon nanotubes, the concentration of methylene blue in the test solution is slightly lowered, resulting in an increase in the transmittance of the test solution. In accordance with the adsorption areas of the photocatalyst particles and the carbon nanotubes, an increase in the transmittance varied slightly.

Next, the petri dishes in which the respective photocatalyst element substrates were being immersed were irradiated with light from fluorescent light for 2 hours. During the irradiation with a visible light beam having a wavelength of 550 nm or less, the photocatalytic reaction progressed, and the methylene blue molecules were degraded over time, resulting in disappearance of the blue color of the test solution. After the irradiation, an aliquot of the test solution was collected from each of the petri dishes, and the transmittance was measured at a wavelength of 644 nm. A test solution having a higher transmittance indicates that the effective area of the photocatalyst element substrate immersed therein was large.

<Result of evaluation of photocatalytic ability>

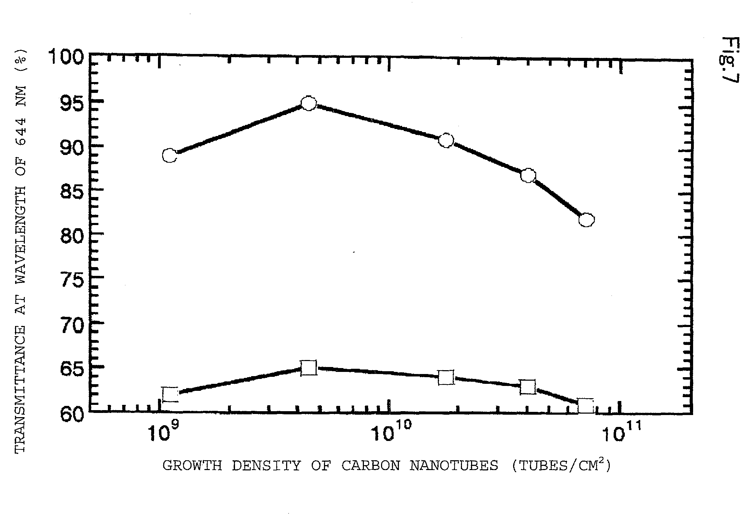

Evaluation was carried out on the photocatalyst element substrates, each having the $TiO_{2-x}N_x$ particles supported on the carbon nanotube assembly, according to the above-described method for evaluating photocatalytic ability. The result is shown in FIG. 7. In FIG. 7, the horizontal axis is a growth density of carbon nanotubes on the substrate (same as the vertical axis in FIG. 6), and the vertical axis is the transmittance of the test solution. In the drawing, the open square symbol represents transmittance after methylene blue was adsorbed to the photocatalytic element substrate in dark room, and the open circle symbol represent transmittance after light from fluorescent light was irradiated to cause a photocatalytic reaction. Accordingly, a difference between transmittance represented by the open circle symbol and transmittance represented by the open square symbol corresponds to an increase in transmittance due to the degradation of methylene blue by the photocatalytic reaction, in other words, corresponds to net photocatalytic ability.

Higher transmittance indicates more progress in the oxidation and degradation reaction of the methylene blue molecules in the test solution. In other words, photocatalytic ability is high as a photocatalytic element substrate. When the growth density of the carbon nanotubes is $4.4\times10^9$ tubes/$cm^2$, the transmittance reaches a maximum value of 95%. This indicates that the effective surface area of the $TiO_{2-x}N_x$ particles is largest among the series of the photocatalytic element substrates. Next, when the growth density of the carbon nanotubes is higher than $4.4\times10^9$ tubes/$cm^2$, the transmittance of the test solution decreased as the growth density of the carbon nanotubes increased, reaching 82% for $7.1\times10^{10}$ tubes/$cm^2$. In other words, this is because the effective surface area of the $TiO_{2-x}N_x$ particles decreased. Conversely, when the growth density of the carbon nanotubes is lower than $4.4\times10^9$ tubes/$cm^2$, the transmittance decreased as well. This is because the number of carbon nanotubes supporting the $TiO_{2-x}N_x$ particles became so small that the effective surface area of the $TiO_{2-x}N_x$ particles decreased.

Based on the above results, it was observed that an area on which the photocatalyst particles are supported can be increased when a carbon nanotube assembly is produced at a desired growth density by adjusting the deposition ratio of the metal catalyst particles and the barrier particles in the catalyst particle dispersed film using the simultaneous sputtering method, resulting in enhanced photocatalytic ability.

(Comparative Example)

By using an intact silica glass substrate on which no carbon nanotube assembly had grown, photocatalyst particles were deposited in the same method as Example 2 to prepare a photocatalytic element substrate. Photocatalytic ability was measured using this photocatalytic element substrate in the above-described method, and it was found that the transmittance was 78%. Accordingly, it was observed that the photocatalytic ability was poorer than that of the substrate on which a carbon nanotube assembly had grown. This is because the $TiO_{2-x}N_x$ particles were not supported in a state in which they still have a small particle diameter since no carbon nanotube assembly was used. As a result, the effective surface area was small.

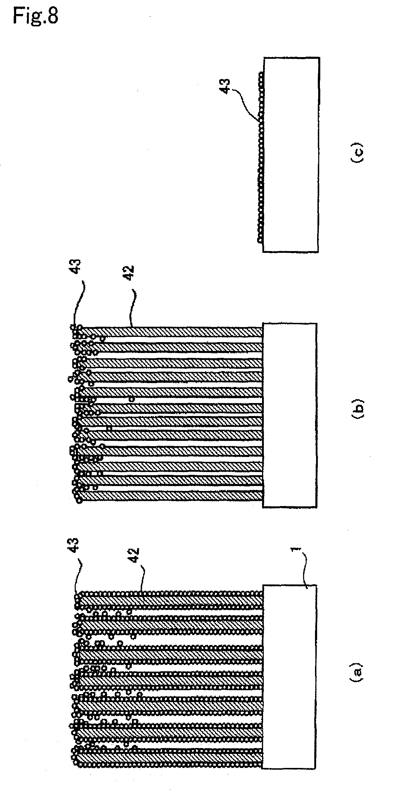

FIGs. 8(a) to (c) each are a schematic view of a formation in which photocatalyst particles are supported on a carbon nanotube assembly grown on a substrate. FIG. 8(a) shows the case where the growth density of carbon nanotubes is low, and Fig. 8(b) shows the case where the growth density of carbon nanotubes is high. In the meantime, Fig. 8(c) is a comparative example in which photocatalyst particles are directly supported on a substrate on which no carbon nanotube assembly is formed. In FIGs. 8 (a) to (c), columns 42 indicated by shaded areas represent carbon nanotubes, 43 indicated by circles represent photocatalyst particles. Differences in deposition amount and effective surface area of the photocatalyst particles are quite obvious.

Each of the above examples is the example in which photocatalyst particles are supported on a carbon nanotube assembly. However, not limited to photocatalyst particles, the material to be supported may be any having a catalytic action, for example, catalytic metals, such as platinum and palladium.

(Example 3)

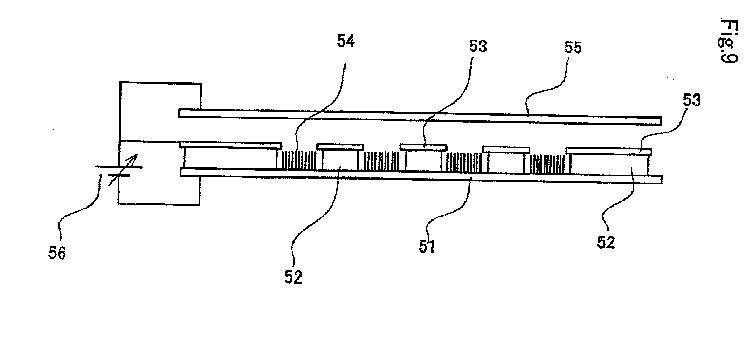

Example 3 relates to a field emission display apparatus (electron emitting element) which uses the carbon nanotube assembly (carbon material) of the present invention as an electron source. FIG. 9 is a schematic cross-sectional view of the display, and 51 represents an emitter electrode, 52 represents an insulator, 53 represents a gate electrode, 54 represents an electron source, 55 represents a phosphor, and 56 represents a DC power source.

In the field emission display apparatus of Example 3, the electron sources 54 comprise the carbon nanotube assembly of the present invention. From the electron sources 54 on the emitter electrode 51 which is biased to a negative potential by the DC power source 56, electrons are released by a field emission phenomenon, and collide to the facing phosphor 55, resulting in generation of fluorescence. At this time, the gate electrode 53 acts as an electron withdrawing electrode, and has a function of withdrawing electrons from the electron sources 54. The insulator 52 acts as an insulating layer among multiple electron sources 54, and has a function of preventing discharge from occurring among the electron sources 54.

In the field emission display related to the present invention, the carbon nanotube assembly which has a uniform number of graphene sheets and is controlled to have a desired growth density appropriate for field emission is used as an electron source. Therefore, reduction in brightness unevenness and lifetime unevenness can be expected compared to a conventional display, using a mixture of many kinds of carbon nanotubes as an electron source, in which purity in terms of the number of graphene sheets is low and the growth density is not controlled to be in a desired range appropriate for field emission.

**Industrial Applicability**

The carbon nanotube assembly of the present invention having a uniform number of graphene sheets and the growth density being controlled can support not only photocatalyst particles but particles having a different catalytic action. For example, applications to fuel-cell electrodes, filters, electrochemical devices, and the like, on which catalytic metals, such as platinum and palladium, are supported, can be expected.

In addition, when the carbon nanotube assembly of the present invention having a uniform number of graphene sheets and the growth density being controlled is used as an electron emission source of field emission, improvement in the uniformity of brightness can be expected.

**Claims**

1. A method for producing a carbon nanotube assembly, the method controlling a growth density of carbon nanotubes on a substrate, comprising:

   a step for preparing a catalyst particle dispersed film-formed substrate including a catalyst particle dispersed film in which metal catalyst particles having a predetermined particle diameter are dispersed among barrier particles; and
   a thermal CVD step for growing carbon nanotubes from the metal catalyst particles serving as starting points by heat decomposition of an organic compound vapor.

2. The method for producing a carbon nanotube assembly according to claim 1, wherein the step for preparing the catalyst particle dispersed film-formed substrate is a catalyst deposition step for depositing metal catalyst particles and barrier particles on a substrate to form the catalyst particle dispersed film.

3. The method for producing a carbon nanotube assembly according to claim 1, further comprising a reduction step for performing a reduction treatment on the metal catalyst particles in the catalyst particle dispersed film in a reducing atmosphere.

4. The method for producing a carbon nanotube assembly according to claim 1, wherein the barrier particles are inorganic compound particles.

5. The method for producing a carbon nanotube assembly according to claim 1, wherein
   the barrier particles are inorganic compound particles,
   the step for preparing the catalyst particle dispersed film-formed substrate is a catalyst deposition step for depositing metal catalyst particles and inorganic compound particles on a substrate to form the catalyst particle dispersed film, and further comprising a reduction step for performing a reduction treatment on the metal catalyst particles in the catalyst particle dispersed film in a reducing atmosphere.

6. The method for producing a carbon nanotube assembly according to claim 4, wherein the catalyst particle dispersed film is formed by a simultaneous sputtering method targeting a catalytic metal and an inorganic compound.

7. The method for producing a carbon nanotube assembly according to claim 1, wherein the metal catalyst particles comprise any one of an alloy of and a mixture of at least one particulate main catalyst selected from the group consisting of Fe, Co, and Ni and at least one particulate auxiliary catalyst selected from the group consisting of high-melting point metals having a melting point of 1500°C or above.

8. The method for producing a carbon nanotube assembly according to claim 4, wherein the inorganic compound particles comprise an oxide containing at least one selected from the group consisting of an aluminum oxide, a magnesium oxide, a titanium oxide, and a silicon oxide.

9. The method for producing a carbon nanotube assembly according to claim 1, wherein
   the metal catalyst particles in the catalyst particle dispersed film formed on the substrate have a particle diameter of 8 nm or less, and
   obtained carbon nanotubes are single-walled carbon nanotubes.

10. The method for producing a carbon nanotube assembly according to claim 1, wherein
    the metal catalyst particles in the catalyst particle dispersed film formed on the substrate have a particle diameter of from 8 nm to 11 nm, and
    obtained carbon nanotubes are double-walled carbon nanotubes.

11. The method for producing a carbon nanotube assembly according to claim 1, wherein

the metal catalyst particles in the catalyst particle dispersed film formed on the substrate have a particle diameter of from 11 nm to 15 nm, and
obtained carbon nanotubes are triple-walled carbon nanotubes.

12. The method for producing a carbon nanotube assembly according to claim 1, wherein
the metal catalyst particles in the catalyst particle dispersed film formed on the substrate have a particle diameter of from 15 nm to 18 nm, and
obtained carbon nanotubes are quad-walled carbon nanotubes.

13. The method for producing a carbon nanotube assembly according to claim 1, wherein
the metal catalyst particles in the catalyst particle dispersed film formed on the substrate have a particle diameter of from 18 nm to 21 nm, and
obtained carbon nanotubes are quint-walled carbon nanotubes.

14. The method for producing a carbon nanotube assembly according to claim 1, wherein a growth density of the carbon nanotubes is controlled by controlling a compounding ratio of the metal catalyst particles and the barrier particles in the catalyst particle dispersed film.

15. The method for producing a carbon nanotube assembly according to claim 1, wherein a growth density of the carbon nanotubes is controlled in a range from $10^9$ to $10^{11}$ tubes/cm$^2$.

16. A catalyst particle dispersed film used for production of a carbon nanotube assembly by a thermal CVD method, wherein metal catalyst particles having a predetermined particle diameter are dispersed among barrier particles.

17. The catalyst particle dispersed film according to claim 16, wherein the barrier particles are inorganic compound particles.

18. The catalyst particle dispersed film according to claim 17, wherein the catalyst particle dispersed film is formed by a simultaneous sputtering method targeting a catalytic metal and an inorganic compound.

19. The catalyst particle dispersed film according to claim 16, wherein the metal catalyst particles comprise any one of an alloy of and a mixture of at least one particulate main catalyst selected from the group consisting of Fe, Co, and Ni and at least one particulate auxiliary catalyst selected from the group consisting of high-melting point metals having a melting point of 1500°C or above.

20. The catalyst particle dispersed film according to claim 17, wherein the inorganic compound particles comprise an oxide containing at least one selected from the group consisting of an aluminum oxide, a magnesium oxide, a titanium oxide, and a silicon oxide.

21. The catalyst particle dispersed film according to claim 16, wherein a compounding ratio of the metal catalyst particles and the barrier particles in the catalyst particle dispersed film is controlled according to a desired growth density of carbon nanotubes.

22. A carbon nanotube assembly being an assembly of carbon nanotubes grown directly on a substrate, wherein
a growth density of the carbon nanotubes is in a range from $10^9$ to $10^{11}$ tubes/cm$^2$, and
a proportion of double-walled carbon nanotubes among carbon nanotubes contained in the assembly is 50% or above.

23. The carbon nanotube assembly according to claim 22, wherein growth directions of the carbon nanotubes are oriented uniformly in a normal line direction with respect to a surface of the substrate.

24. A carbon nanotube assembly being an assembly of carbon nanotubes grown directly on a substrate, wherein
a growth density of the carbon nanotubes is in a range from $10^9$ to $10^{11}$ tubes/cm$^2$, and
a proportion of triple-walled carbon nanotubes among carbon nanotubes contained in the assembly is 50% or above.

25. The carbon nanotube assembly according to claim 24, wherein growth directions of the carbon nanotubes are oriented uniformly in a normal line direction with respect to a surface of the substrate.

26. A carbon nanotube assembly being an assembly of carbon nanotubes grown directly on a substrate, wherein

a growth density of the carbon nanotubes is in a range from $10^9$ to $10^{11}$ tubes/cm$^2$, and
a proportion of quad-walled carbon nanotubes among carbon nanotubes contained in the assembly is 50% or above.

27. The carbon nanotube assembly according to claim 26, wherein growth directions of the carbon nanotubes are oriented uniformly in a normal line direction with respect to a surface of the substrate.

28. A carbon nanotube assembly being an assembly of carbon nanotubes grown directly on a substrate, wherein a growth density of the carbon nanotubes is in a range from $10^9$ to $10^{11}$ tubes/cm$^2$, and a proportion of quint-walled carbon nanotubes among carbon nanotubes contained in the assembly is 50% or above.

29. The carbon nanotube assembly according to claim 28, wherein growth directions of the carbon nanotubes are oriented uniformly in a normal line direction with respect to a surface of the substrate.

30. The carbon nanotube assembly according to any one of claims 22 to 29, further comprising catalyst particles supported on the carbon nanotube assembly.

31. The carbon nanotube assembly according to claim 30, wherein the catalyst particles are photocatalyst particles.

32. The carbon nanotube assembly according to claim 31, wherein
the photocatalyst is titanium oxide, and
the photocatalyst exhibits photocatalytic ability in response to visible light having a wavelength of 550 nm or less when the growth density of the carbon nanotubes is from $10^9$ to $10^{10}$ tubes/cm$^2$.

33. An electron emitting element using the carton nanotube assembly according to any one of claims 22 to 29 as an electron source.

34. A field emission display, comprising:

an emitter electrode;
an electron source being provided on the emitter electrode and emitting electrons by a field emission phenomenon;
a phosphor emitting fluorescence due to collision of electrons emitted from the electron source; and
an insulator preventing discharge between the electron source and its adjacent electron source, wherein the carbon nanotube assembly according to any one of claims 22 to 29 is used as the electron source.

Fig.1

Fig.2

Fig.3

(a)

(b)

(c)

**Fig. 4**

015024 5.0 kV X7.00K 4.29μm

**Fig.5**

015014 5.0 kV X200K 150nm

## Fig.6

Fig.7

Fig.8

Fig.9

<div align="center">

**INTERNATIONAL SEARCH REPORT**

</div>

| | International application No. |
|---|---|
| | PCT/JP2007/054901 |

A. CLASSIFICATION OF SUBJECT MATTER
*C01B31/02*(2006.01)i, *B01J21/18*(2006.01)i, *B01J23/85*(2006.01)i, *B01J35/02*(2006.01)i, *B82B1/00*(2006.01)i, *B82B3/00*(2006.01)i, *H01J1/30*(2006.01)i, *H01J31/12*(2006.01)i
According to International Patent Classification (IPC) or to both national classification and IPC

B. FIELDS SEARCHED

Minimum documentation searched (classification system followed by classification symbols)
C01B31/02, B01J21/18, B01J23/85, B01J35/02, B82B1/00, B82B3/00, H01J1/30, H01J31/12

Documentation searched other than minimum documentation to the extent that such documents are included in the fields searched
Jitsuyo Shinan Koho          1922–1996    Jitsuyo Shinan Toroku Koho    1996–2007
Kokai Jitsuyo Shinan Koho    1971–2007    Toroku Jitsuyo Shinan Koho    1994–2007

Electronic data base consulted during the international search (name of data base and, where practicable, search terms used)
Science Direct, JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-342012 A  (Noritake Co., Ltd.),<br>03 December, 2003 (03.12.03),<br>Claims 1, 2; Par. Nos. [0003], [0005],<br>[0021] to [0023], [0031]<br>(Family: none) | 22,23,33,34<br>1-21,24-32 |
| X<br>A | JP 2003-335509 A  (Noritake Co., Ltd.),<br>25 November, 2003 (25.11.03),<br>Claims 1, 2; Par. Nos. [0003], [0005], [0017]<br>(Family: none) | 22,23,33,34<br>1-21,24-32 |
| X<br>Y<br>A | JP 2003-277029 A  (Fujitsu Ltd.),<br>02 October, 2003 (02.10.03),<br>Claim 7; Par. Nos. [0007], [0026], [0032],<br>[0034], [0044] to [0049]<br>& US 2003/0124717 A1 | 22-29,33,34<br>30-32<br>1-21 |

☒ Further documents are listed in the continuation of Box C.      ☐ See patent family annex.

| | |
|---|---|
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>09 May, 2007 (09.05.07) | Date of mailing of the international search report<br>22 May, 2007 (22.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2007/054901 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-063440 A (Fuji Electric Retail Systems Co., Ltd.), 09 March, 2006 (09.03.06), Claims 1, 3; Par. Nos. [0001], [0040] to [0049] (Family: none) | 30-32 |
| A | JP 2005-097015 A (Toyota Motor Corp.), 14 April, 2005 (14.04.05), Full description (Family: none) | 1-34 |
| A | Yusuke TAKI et al., High-yield Synthesis of SWCNTs, DWCNTs and triple-walled CNTs by controlling catalyst diameters without any post-treatments, Dai 29 Kai Fullerene-Nanotubes General Symposium Koen Yoshishu, 2005, p.13 | 1-34 |
| A | Mineo HIRAMATSU, High-Rate Growth of Films of Dense, Aligned Double-Walled Carbon Nanotubes Using Microwave Plasma-Enhanced Chemical Vapor Deposition, Japanese Journal of Applied Physics, Vol. 44, No. 22, 2005, pp. L693-L695 | 1-34 |
| A | JP 2001-278627 A (Sumitomo Chemical Co., Ltd.), 10 October, 2001 (10.10.01), Claims 1 to 3; Par. No. [0005]; examples 1, 2 & US 2003/0085445 A1 | 32 |

Form PCT/ISA/210 (continuation of second sheet) (April 2005)

**EP 1 995 213 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11263609 B
- JP 2002356776 A
- JP 2004352512 A
- JP 2004107162 A
- JP 2004002182 A
- JP 2002289086 A
- JP 2005279596 A
- JP 2005125187 A